Europäisches Patentamt

European Patent Office

Office européen des brevets

(19)

(11) Numéro de publication: **0 078 218**
**B1**

(12) **FASCICULE DE BREVET EUROPEEN**

(45) Date de publication du fascicule du brevet: **03.02.88**

(51) Int. Cl.⁴: **G 11 B 23/28,** G 11 B 5/86, G 11 B 27/30

(21) Numéro de dépôt: **82401966.5**

(22) Date de dépôt: **26.10.82**

(54) **Procédé d'identification d'enregistrements sonores illicites et installation de duplication mettant en oeuvre le procédé.**

(30) Priorité: **28.10.81 FR 8120250**

(43) Date de publication de la demande:
**04.05.83 Bulletin 83/18**

(45) Mention de la délivrance du brevet:
**03.02.88 Bulletin 88/05**

(84) Etats contractants désignés:
**AT BE CH DE GB IT LI LU NL SE**

(56) Documents cités:
**EP-A-0 021 971**
**WO-A-80/02757**
**WO-A-82/02111**
**FR-A-2 288 369**
**FR-A-2 415 862**
**GB-A-1 525 292**
**US-A-3 423 743**
**US-A-3 801 750**
**US-A-3 875 588.**
**US-A-4 086 638**

(73) Titulaire: **Baranoff-Rossine, Dimitri**
**7 rue Molière**
**F-75001 Paris (FR)**

(72) Inventeur: **Baranoff-Rossine, Dimitri**
**7 rue Molière**
**F-75001 Paris (FR)**

(74) Mandataire: **Thevenet, Jean-Bruno**
**Cabinet BEAU DE LOMENIE 55 rue d'Amsterdam**
**F-75008 Paris (FR)**

EP 0 078 218 B1

Courier Press, Leamington Spa, England.

## Description

Procédé d'identification d'enregistrements sonores illicites et installation de duplication mettant en oeuvre le procédé.

La présente invention a pour objet un procédé d'identification d'enregistrements sonores illicites, selon lequel on associe au signal d'information sonore un signal auxiliaire codé spécifique à chaque enregistrement individuel, le signal auxiliaire étant mélangé au signal d'information sonore au cours de l'enregistrement du signal d'information sonore sur un support d'enregistrement de telle sorte que le signal auxiliaire soit inscrit de façon répétée tout au long de l'enregistrement, et le signal auxiliaire étant constitué par un signal numérique codé par dérive d'une fréquence de base située dans une gamme au-delà des fréquences audibles, du côté des ultrasons, les signaux numériques codés étant détectés et comparés plusieurs fois lors de la lecture du support d'information.

L'invention concerne également la mise en oeuvre d'un tel procédé grâce à une installation de duplication d'enregistrements sonores effectués sur au moins une piste d'un support d'enregistrement tel qu'une bande magnétique, l'installation de duplication comprenant un ensemble maître de lecture de signaux d'information sonore et de signaux de fin de séquence intercalés entre deux séquences de programme du signal d'information sonore, lesdits signaux étant enregistrés sur une bande magnétique mère et au moins un ensemble esclave d'enregistrement sur un support individuel d'enregistrement final desdits signaux d'information sonore et signaux de fin de séquence lus sur la bande-mère l'ensemble esclave d'enregistrement comprenant, associés à un circuit égaliseur d'enregistrement et à un circuit amplificateur d'enregistrement, un circuit égaliseur fournissant lesdits signaux d'information, un oscillateur de polarisation et un amplificateur de prémagnétisation de puissance étant connectés en séries audit circuit égaliseur.

Dans le domaine de l'enregistrement sonore sur des supports d'enregistrement tels que disques, bandes magnétiques, et surtout bandes magnétiques montées dans des cassettes, il existe fréquemment des copies non autorisées des enregistrements sonores existants. Ce phénomène dit de piraterie des enregistrements sonores cause un préjudice considérable aux auteurs-compositeurs qui ne peuvent percevoir de droits de reproduction dits mécaniques sur les produits pirates qui constituent des répliques non autorisées d'enregistrements initiaux eux-mêmes réalisés licitement.

Le problème se pose de pouvoir identifier avec certitude les enregistrements sonores illicites sans que pour autant les moyens de contrôle utilisés affectant la qualité des signaux principaux d'information sonore enregistrés sur les supports d'enregistrement à contrôler.

On déjà proposé de superposer au signal d'information principal enregistré, un signal auxiliaire codé permettant de repérer l'origine de l'enregistrement. Toutefois, selon certains systèmes connus, la superposition d'un signal supplémentaire de contrôle affecte la qualité de la reproduction du signal principal.

Selon d'autres systèmes connus, par exemple par le document EP—A—0021971, le signal codé superposé au signal principal est constitué par un signal numérique codé par dérive d'une fréquence pilote et n'affecte pas de façon sensible la qualité de la reproduction du signal principal. Toutefois, un tel signal codé n'est pas adapté pour être différent pour chaque unité d'un lot de supports d'enregistrements, tels que des cassettes, enregistrés simultanément à partir d'une même enregistrement présent sur une bande-mère. De la sorte, plusieurs enregistrements présentent un signal commun de codage et là encore il n'existe pas de moyen de déterminer si un enregistrement testé donné constitue une copie autorisée ou non.

La présente invention vise précisément à remédier aux inconvénients précités et à permettre de déterminer avec précision et certitude si un enregistrement testé a été réalisé de façon licite, ou non, tout en offrant également la possibilité de déterminer l'origine exacte de l'enregistrement. La présente invention a ainsi plus particulièrement pour objet de permettre l'enregistrement sur chaque support individuel d'enregistrement final, tel qu'une cassette, d'un code original d'identification attaché à ce seul support individuel d'enregistrement sans que la qualité du programme enregistré soit elle-même affectée et par suite de permettre de détecter si entre plusieurs enregistrements il y a des copies autorisées ou non.

Ces buts sont atteints grâce à un procédé d'identification d'enregistrements sonores illicites, tel que défini en tête de la description, caractérisé en ce que l'on introduit le signal auxiliaire au cours d'une opération individuelle d'enregistrement du signal d'information sonore sur le support d'enregistrement final à partir de la lecture d'une bande-mère sur laquelle ont été enregistrés au préalable à la fois le signal d'information sonore et un signal de fin de séquence intercalé entre deux séquences de programme du signal d'information sonore, en ce que le signal auxiliaire est spécifique à chaque enregistrement individuel réalisé et est incrémenté à chaque détection d'un signal de fin de séquence lors de la lecture de la bande-mère, en ce que l'on mélange le signal auxiliaire au signal d'information sonore au cours de l'enregistrement du signal d'information sonore sur le support d'enregistrement final de manière à inscrire le signal auxiliaire de façon répétée tout au long de l'enregistrement et en ce que le signal auxiliaire numérique codé est dérivé d'une fréquence pilote F qui correspond à la fréquence de base f multipliée par un coefficient égal au rapport entre la vitesse de défilement du support individuel d'enregistrement final lors de l'opération individuelle d'enregistrement et la vitesse de défilement du support individuel d'enregistrement final en lecture normale de ce dernier, de telle sorte qu'il suffit de détecter et comparer les signaux numériques codés de deux supports d'enregistrement finals pour contrôler si l'un est réalisé d'une façon illicite.

De préférence, le signal auxiliaire est mélangé au signal d'information sonore après passage de ce dernier dans les circuits d'égalisation présents dans le dispositif individuel servant à l'enregistrement sur le support d'enregistrement final.

Selon une application possible de la présente invention, on associe plusieurs opérations individuelles d'enregistrement simultané d'un même signal d'information sonore avec des signaux auxiliaires codés propres à chaque support d'enregistrement final et ces opérations individuelles d'enregistrement sont effectuées en coopération avec une seule opération de lecture d'une bande-mère commune.

Selon un autre mode de réalisation particuliér, au cours de deux opérations individuelles simultanées d'enregistrement sur deux pistes différentes d'un même support d'enregistrement final à partir des lectures de deux pistes correspondantes d'une bande-mère, on introduit un premier signal auxiliaire codé sur une piste du support d'enregistrement final et un second signal auxiliaire codé correspondant à un signal codé séquentiellement en sens inverse du premier signal sur l'autre piste du support d'enregistrement final.

A titre d'exemple, dans le procédé conforme à l'invention, qui peut être mis en oeuvre en combinaison avec une duplication rapide d'enregistrements sonores, ledit coefficient multiplicateur peut être égal à 8, 16, 32 ou 64.

La fréquence de base f est avantageusement comprise entre environ 15 et 18 kHz.

Selon une autre mode réalisation particulier, le signal de fin de séquence de programme présente une fréquence fondamentale comprise entre environ 5 Hz et 10 Hz, est porté par une modulation d'amplitude et est enregistré sur la bande-mère dans les intervalles libres situés entre deux séquences consécutives différentes de programme du signal d'information sonore.

De préférence, ledit signal auxiliaire est inscrit à un niveau d'amplitude de plusieurs dizaines de décibels en-dessous du niveau maximal du signal d'information sonore.

Selon un mode particulier de réalisation, le signal auxiliaire comporte, après une période à fréquence fixe, une période de synchronisation primaire définissant un rythme de signal numérique, une période de synchronisation secondaire comprenant un groupe codé dit de format, puis un groupe codé spécifique dont au moins une partie est modifiée après chaque détection d'un signal de fin de séquence.

Le groupe codé spécifique peut lui-même comprendre des informations relatives au lieu, à la date et à l'heure d'enregistrement, ainsi qu'au numéro de la machine d'enregistrement et au numéro d'ordre de l'enregistrement individuel effectué au cours d'une opération d'enregistrement d'une série de supports individuels d'enregistrements finals sur une même machine et sur une période de temps prédéterminée.

L'invention concerne encore une installation de duplication du type mentionné ci-dessus caractérisée en ce que l'ensemble esclave comprend des circuits de détection et de régénération des signaux de fin de séquence, lesquels circuits sont connectés en sortie dudit amplificateur d'enregistrement, des circuits de codage numérique par dérive d'une fréquence pilote, pour produire un signal numérique auxiliaire codé, des moyens associés au circuit de régénération des signaux de fin de séquence et connectés aux circuits de codage numérique pour modifier le codage numérique à chaque nouvelle détection de signaux de fin de séquence et un circuit additionneur en amont de la tête d'enregistrement esclave sur le support individuel d'enregistrement final pour additionner le signal numérique auxiliaire codé au signal d'information sonore.

Les circuits de détection et de régénération des signaux de fin de séquence comprennent un filtre passe-bande et un circuit de régénération pour régénérer un signal codé binaire démodulé de fin de séquence.

Les circuits de codage numérique par dérive d'une fréquence pilote F comprennent une horloge stabilisée de référence, un comparateur de phase dont une première entrée est connectée en sortie d'un circuit diviseur fixe étant connecté à ladite horloge, un oscillateur à fréquence commandée par tension connecté d'une part à un circuit diviseur programmé et d'autre part à un circuit de mise en forme sinusoïdale pure dont la sortie est reliée au circuit additionneur, un circuit intégrateur étant en outre interposé entre la sortie dudit comparateur de phase et l'oscillateur à fréquence commandée et le diviseur programmé étant connecté d'une part à un microprocesseur auquel sont appliqués les signaux d'horloge des informations d'élaboration du signal numérique auxiliaire codé, et le signal codé binaire démodulé de fin de séquence, et d'autre part à une deuxième entrée dudit comparateur de phase.

Les informations d'élaboration du signal numérique auxiliaire codé sont enregistrées dans des mémoires associées au microprocesseur.

Des moyens d'autorisation sont prévus pour ne délivrer les informations d'élaboration du signal numérique auxiliaire codé qu'en réponse à l'application au microprocesseur d'un code de sécurité.

Ces moyens d'autorisation peuvent n'autoriser que la délivrance d'un nombre prédéterminé d'informations d'élaboration du signal numérique auxiliaire codé lorsqu'un code de sécurité est appliqué.

Avantageusement, le code de sécurité est appliqué au moyen d'un support tel qu'une carte magnétique ou une cassette statique et des informations sont enregistrées sur ledit support lorsque les moyens d'autorisation ont donné une autorisation en réponse à l'application du code de sécurité.

On notera que le procédé et l'installation selon l'invention permettant d'affecter un code différent à chaque enregistrement individuel réalisé, même lorsqu'une série importante d'enregistrements est réalisée en une seule opération. Le code introduit dans chaque enregistrement n'affecte pas la qualité du signal sonore enregistré et permet en outre d'identifier l'origine du produit. Pour contrôler si dans un lot de cassettes par exemple les enregistrements ont été réalisés de façon licite, il suffit de détecter ou comparer les codes de deux cassettes différentes. Si les cassettes ont bien été enregistrées de façon licite, elles présenteront obligatoirement deux codes différents. Si, au contraire, les cassettes correspondent à des enregistrements dus à une activité de piraterie, la détection fera apparaître soit une absence de code, soit deux codes identiques correspondant au code de la cassette licite à partir de laquelle les enregistrements non autorisés ont été effectués.

Par ailleurs, les modifications à apporter aux installations de duplication existantes pour mettre en oeuvre le procédé conforme à l'invention s'avèrent commodes à réaliser et peu onéreuses comme cela ressort des caractéristiques énoncées plus haut.

D'autres caractéristiques et avantages de l'invention ressortiront de la description suivante de modes particuliers de réalisation, en référence aux dessins annexés, sur lesquels:

La figure 1 est une vue schématique d'une installation de duplication d'enregistrements sonores mettant en oeuvre l'invention,

la figure 2 est une vue de circuits particuliers de codage utilisés dans le cadre de l'installation de la figure 1,

la figure 3 représente un exemple de signal codé de fin de séquence,

la figure 4 représente la courbe de réponse d'un égaliseur d'enregistrement utilisé dans les circuits de la figure 2, et

la figure 5 représente un exemple de circuit de décodage destiné à coopérer avec un dispositif de lecture des supports d'enregistrement finaux codés selon la présente invention.

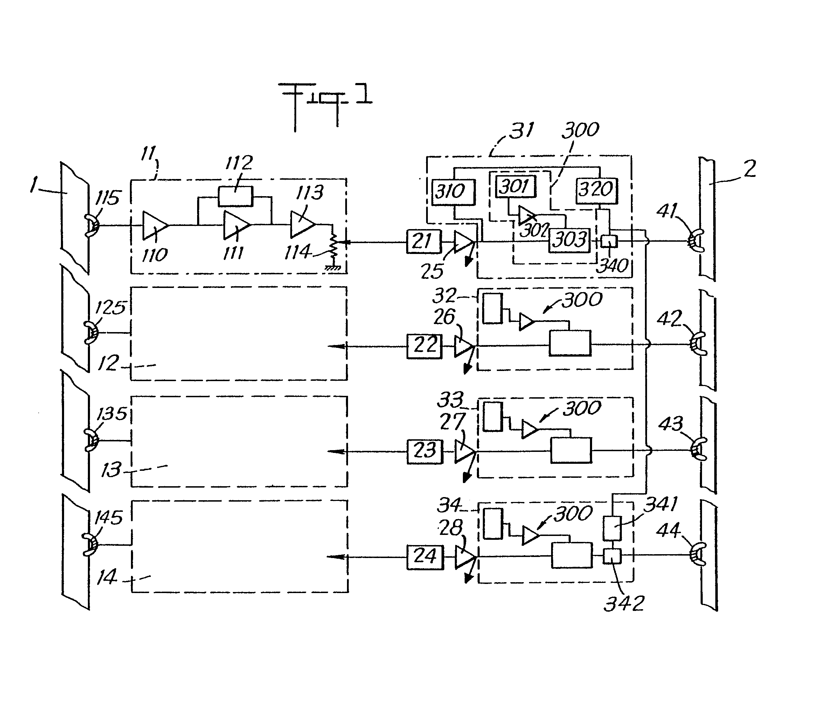

On voit sur la figure 1 le schéma d'une partie d'installation de duplication rapide d'enregistrements sonores. On sait que dans ce genre d'installation de duplication il est utilisé une bande-mère 1, encore appelée bande-maître, qui est préenregistrée à une vitesse d'enregistrement généralement égale à la vitesse de lecture des supports d'enregistrement finals sur lesquels le programme sonore préenregistré sur la bande-mère sera dupliqué. Cette vitesse de préenregistrement pourrait cependant dans certains cas être légèrement différente de la vitesse de lecture des supports d'enregistrement finals et par exemple être égale au double ou à la moitié de cette vitesse de lecture.

L'installation de duplication comprend, pour chaque piste de la bande-mère 1, une tête de lecture telle que 115 associée à une unité de lecture telle que 11, dite encore ensemble maître et destinée à fournir des signaux électriques représentant le programme sonore enregistré sur la piste correspondante de la bande-mère 1. Dans une installation de duplication rapide, la bande-mère est lue à une vitesse très supérieure à la vitesse d'enregistrement de cette bande-mère, le coefficient multiplicateur pouvant être par exemple égal à 32. Ceci permet un gain de temps lors de la duplication, mais naturellement les signaux électriques traités sont alors à des fréquences très supérieures au domaine des fréquences audibles.

Une unité de lecture 11 d'un ensemble maître comporte de façon connue en soi un préamplificateur de lecture 110 relié à la tête de lecture correspondante 115, un amplificateur de lecture 111 connecté à la sortie du préamplificateur de lecture 110, un amplificateur de puissance de lecture 113 connecté à la sortie de l'amplificateur de lecture 111, un atténuateur 114 connecté en sortie de l'amplificateur de puissance de lecture 113 et un circuit 112 d'égalisation de lecture monté en parallèle sur l'amplificateur de lecture 111.

La bande-mère 1 comporte l'enregistrement d'au moins une séquence de programme sonore à laquelle peut éventuellement être superposé un signal codé annexe portant des informations relatives par exemple au titre de l'oeuvre enregistrée et à l'auteur de cette oeuvre. Ce signal codé annexe peut être par exemple conforme à celui défini dans le document EP—A—0021971. Un signal de fin de séquence est en outre enregistré sur la bande-mère 1 entre deux séquences successives de programme sonore de manière à permettre le repérage de la fin de chaque séquence de programme sonore, et le début de la séquence suivante.

Le signal de fin de séquence peut être codé et être intercalé entre le divers morceaux d'un programme destiné à figurer dans un même unité de bande magnétique prévue pour être montée par exemple dans une cassette individuelle. Ce signal de fin de séquence pourra permettre, lors de la lecture de la cassette, de repérer automatiquement chaque morceau du programme et de positionner automatiquement la tête de lecture au début du morceau choisi. Un code particulier est en outre affecté au signal de fin de séquence situé à la fin du dernier morceau enregistré et destiné à repérer la fin du programme enregistré. Dans ce qui suit, on considérera comme signal de fin de séquence exclusivement le signal de fin de séquence destiné à repérer la fin d'un programme devant être enregistré sur une même cassette ou d'une manière générale sur un même support d'enregistrement final 2. En effet, dans le cas d'une installation de duplication rapide, c'est ce signal de fin de programme qui est utile en premier lieu. Lorsqu'un programme sonore correspondant au contenu d'une cassette à enregistrer est préenregistré sur une bande-mère 1 bouclée sur elle-même, le signal de fin de séquence permet de repérer le début de chaque répétition de la lecture du programme préenregistré effectuée sur l'ensemble maître 11 aux fins de duplication sur une bande finale 2.

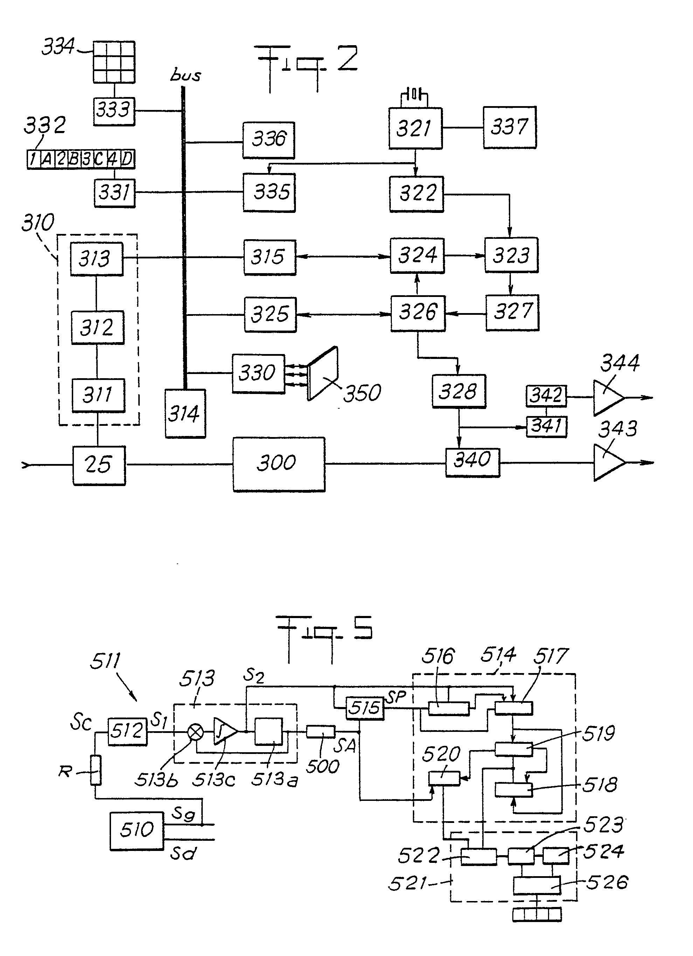

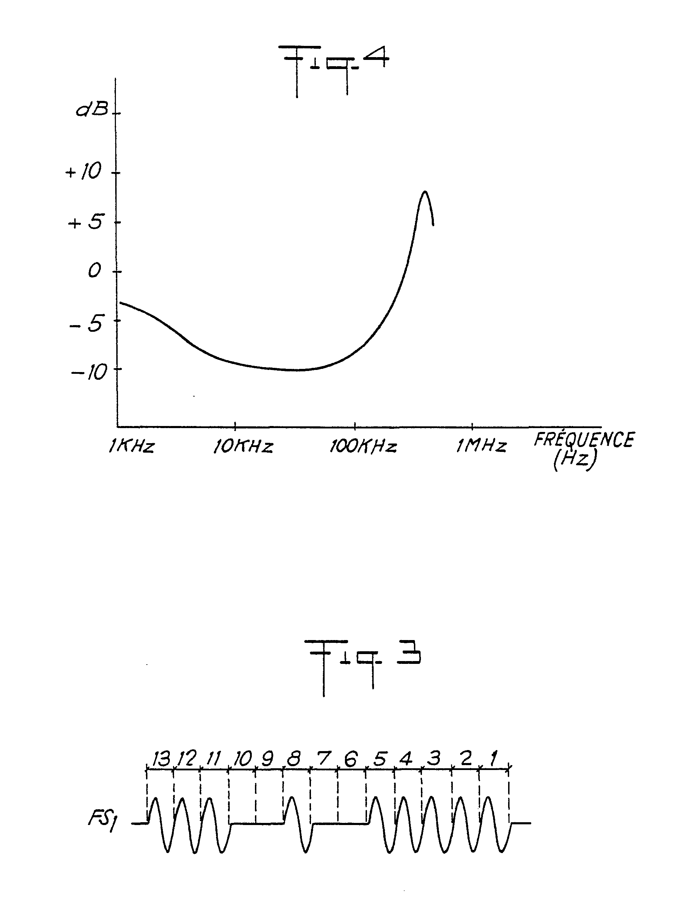

Le signal de fin de séquence peut par exemple être codé à une fréquence fondamentale de 5 Hz, l'information étant portée par une modulation d'amplitude. Un signal de fin de séquence complet, interposé à la fin d'une séquence complète de programme, et non superposé au signal audio, peut se composer par exemple de 13 périodes du signal à 5 Hz—Un "1" est représenté par une période du signal à 5 Hz et un "0" par l'absence de signal pendant une période. La figure 3 montre un exemple de signal codé de fin de séquence SQ qui correspond effectivement au signal de fin de programme auquel est affecté le code 51.

L'installation de duplication rapide représentée sur la figure 1 comprend, pour chaque ensemble maître 11 de lecture d'une piste de la bande-mère 1 un ensemble d'enregistrement comprenant un circuit égaliseur d'enregistrement 21, un amplificateur d'enregistrement 25 connecté en sortie de l'égaliseur d'enregistrement 21 et au moins un ensemble d'enregistrement esclave 31 qui commande une tête magnétique associée 41 pour enregistrer sur une piste de la bande finale 2 des signaux identiques à ceux du programme sonore et des signaux de fin de séquence SQ préenregistrés sur la bande-mère 1. Naturellement, l'enregistrement en duplication rapide sur la bande final 2 doit être effectué à une vitesse compatible avec celle de la lecture de la bande-mère 1 par l'ensemble maître 11 de manière à ne pas déformer les signaux du programme sonore. Ainsi, l'enregistrement sur la bande finale 2 sera effectué en général à une vitesse très supérieure à la vitesse normale de lecture de la bande finale 2.

Afin de réaliser une duplication complète en une seule opération d'une bande magnétique comportant deux paires de pistes destinées à permettre l'enregistrement d'un programme sonore en stéréophonie dans les deux sens de défilement de la bande, quatre ensembles maîtres 11, 12, 13, 14 associés à quatre têtes de lecture 115, 125, 135, 145 peuvent fonctionner simultanément pour lire les quatre pistes de la bande-mère 1. Les ensembles maîtres 12, 13, et 14 sont strictement identiques à l'ensemble maître 11 précédemment décrit. Dans ce cas, l'enregistrement simultané sur les quatre pistes de la bande finale 2 est réalisé à l'aide de quatre sous-ensembles d'enregistrement associées à quatre têtres magnétiques 41, 42, 43, 44 et connectés respectivement aux ensembles maîtres 11, 12, 13, 14. Les sous-ensembles d'enregistrement comprennent chacun un égaliseur d'enregistrement 21, 22, 23, 24, un amplificateur d'enregistrement 25, 26, 27, 28 et au moins un ensemble d'enregistrement esclave 31, 32, 33, 34 qui commande la tête magnétique associée 41, 42, 43, 44 d'enregistrement sur la bande finale 2.

Dans la pratique, la bande-mère 1 bouclée sur elle-même effectue plusieurs rotations successives devant les têtes de lecture 115, 125, 135, 145 (par exemple 200 tours) pendant le défilement de la bande finale 2 devant les têtes 41, 42, 43, 44. De la sorte, une succession d'enregistrements du même programme préenregistré sur la bande-mère 1 sont effectués à la suite les uns des autres sur la bande finale 2, le signal de fin de séquence SQ placé à la fin du programme sonore sur la bande-mère 1 étant également reproduit sur la bande finale 2 après chaque nouvel enregistrement du programme à dupliquer. Ce signal de fin de séquence servira ensuite à reperer la fin de chaque programme sur la bande finale 2 afin de découper cette bande en tronçons correspondant chacun à un programme et de monter ensuite chaque tronçon dans une cassette par exemple.

L'installation de duplication peut encore fonctionner de manière à effectuer des enregistrements simultanés sur plusieurs bandes finales 2, par exemple cinq à dix bandes, à partir de la lecture d'une seule bande-mère 1. Dans ce cas, plusieurs ensembles d'enregistrement esclaves tels que 31, associés chacun à une tête magnétique telle que 41 affectée à une piste déterminée de l'une des bandes 2 sont montés en parallèle. De même, pour chacune des quatre pistes des différentes bandes finales 2, plusieurs ensembles d'enregistrement esclaves associés chacun à une tête magnétique propre et montés en parallèle permettant des enregistrements simultanés sur plusieurs bandes différentes 2.

Chaque ensemble d'enregistrement esclave 31, 32, 33, 34 comprend, de façon connue en soi, un sous-ensemble 300 comprenant un oscillateur de polarisation 301, un amplificateur de prémagnétisation de puissance 302 et un circuit égaliseur d'esclave 303. Le circuit égaliseur d'esclave qui joue le rôle de filtre présente une courbe de réponse en fonction de la fréquence qui est de la forme représentée sur la figure 4.

Comme on peut le constater, un très grand nombre d'enregistrements dupliqués peuvent être réalisés sur une ou plusieurs bandes finales 2 à partir d'un même programme enregistré sur une bande-mère 1. Dans le cas où un signal codé situé au-delà des fréquences audibles est enregistré sur la bande-mère 1 en superposition aux signaux audio du programme sonore sur au moins une piste pour chaque sens de défilement, comme préconisé dans le document EP—A—0021 971 précité, ce signal codé se retrouve tel quel dans les différentes répliques de l'enregistrement de la bande-mère effectués sur les bandes finales 2.

Or, il est précisément souhaitable que chaque cassette individuelle, même lorsqu'elle est réalisée par duplication, comporte un moyen d'identification qui lui soit exclusif afin de prévenir ou détecter des duplications non autorisées.

Conformément à l'invention, sur au moins une piste pour chaque sens de défilement de la bande magnétique, et au cours d'une opération individuelle d'enregistrement du signal d'information sonore sur la bande finale 2 à l'aide d'un ensemble d'enregistrement esclave 31, on introduit un signal auxiliaire constitué par un signal numérique codé par dérive d'une fréquence pilote et incrémentée à chaque détection d'un signal de fin de séquence SQ, de sorte que ce signal auxiliaire comporte un code spécifique d'identification qui est changé à chaque nouvelle duplication du programme de base préenregistré. Par suite, avec le procédé selon l'invention, deux enregistrements différents d'un même programme doivent obligatoirement présenter des codes d'identification différents et la présence d'un lot de cassettes ayant un même code d'identification apporte la preuve d'une duplication non autorisée.

Le signal auxiliaire codé d'identification est mélangé au signal d'information sonore au cours de l'opération d'enregistrement à l'aide de l'ensemble d'enregistrement esclave 31 de façon que ce signal auxiliaire soit inscrit de façon répétée tout au long de l'enregistrement. Le signal auxiliaire codé peut être de la forme décrite dans le document EP—A—0021 971 précité relatif à un procédé pour associer une information auxiliaire à une information principale. Toute-fois, dans le cas de la présente invention où ils s'agit d'introduire un signal auxiliaire d'identification au cours d'une opération de duplication rapide, le signal auxiliaire numérique codé est dérivé d'une fréquence pilote F qui correspond à une fréquence de base f située dans un gamme au-delà des fréquences audibles du côté des ultrasons, par exemple comprise entre environ 15 et 18 kHz, multipliée par un coefficient multiplicateur égal au rapport entre la vitesse défilement de la bande finale 2 lors de l'opération individuelle d'enregistrement et la vitesse normale de lecture de cette bande finale 2. Ce coefficient multiplicateur peut être par exemple de 8, 16, 32 ou 64 et dépend du type de l'installation de duplication rapide.

Le signal auxiliaire est de préférence inscrit à un niveau d'amplitude de plusieurs dizaines de décibels en-dessous du niveau maximal du signal d'information sonore et, s'il reste parfaitement inaudible notamment du fait de sa fréquence, il peut être parfaitement pris en compte à la reproduction par le dispositif de lecutre et il suffit d'adjoindre un décodeur approprié à ce dernier.

Plusieurs possibilités sont offertes pour le codage de l'information auxiliaire en vue de produire le signal auxiliaire. On peut faire appel à cette fin aux techniques connues de transmission de l'information numérique ou analogique, utilisant des procédés connus de codage et de modulation.

Le signal auxiliaire peut par exemple être une "tranche" d'information de durée relativement courte, environ 5 à 10 secondes, constituée en plusieurs périodes, comme suit.

Une première période est formée par un signal de fréquence fixe Fo située dans la gamme des fréquences inaudibles, par exemple entre 16 et 18 kHz.

Une seconde période contient une modulation de la fréquence Fo à un rythme de synchronisation numérique de bits (synchronisation primaire). La modulation est par exemple du type FSK ("Frequency Shift Keying"), la fréquence du signal modulé prenant la valeur $Fo+\Delta F$ ou $Fo-\Delta F$ selon la valeur de l'information binaire. $\Delta F$ est par exemple égal à quelques centaines de Hz.

Une troisième période contient un mot codé dit de synchronisation de format qui est commun aux enregistrements d'un même type et qui est utilisé pour déterminer l'instant à partir duquel commence exactement le message constituant l'information auxiliaire proprement dite (synchronisation secondaire).

La quatrième et dernière période contient ce message particularisant l'enregistrement auquel il est associé et qui est modifié à chaque détection d'un signal de fin de séquence. Ce message pourra par exemple comporter les éléments d'identification du lieu où cet enregistrement a été effectué, de la date et de l'heure d'enregistrement, du laboratoire d'enregistrement, de la machine d'enregistrement et du numéro d'ordre de l'enregistrement individuel effectué au cours d'une opération d'enregistrement d'une série de programmes sonores successifs sur un même bande finale 2 à l'aide d'une même machine sur une période de temps prédéterminée, par exemple sur une heure.

L'ensemble d'enregistrement esclave 31 destiné à introduire le signal auxiliaire d'identification sur une piste donnée de la bande finale 2 comprend des circuits 310 de détection et de régénération des signaux de fin de séquence. Ces circuits 310 sont connectés en sortie de l'amplificateur d'enregistrement 25 et sont associés à des circuits 320 de codage numérique par dérive d'une fréquence pilote pour produire le signal numérique auxiliaire codé qui est mélangé au signal d'information sonore dans un circuit additionneur 340 en amont de la tête d'enregistrement esclave 41. Le circuit additionneur pourrait être connecté avant le circuit égaliseur d'esclave 303, mais est de préférence disposé en aval de celui-ci pour éviter que l'effet de filtre du circuit 303 n'affecte le signal auxiliaire codé.

Il est suffisant d'introduire le signal auxiliaire d'identification sur une seule des deux pistes de la bande 2 affectées à un même sens de défilement. Dans ce cas, il est possible de superposer aux signaux audio sur l'autre piste, au niveau de la bande-mère 1, des signaux auxiliaires codés destinés à indiquer par exemple le titre de l'oeuvre ou le nom de l'auteur, c'est-à-dire comportant des informations liées au programme sonore enregistré qui seront reproduites telles quelles sur toutes les répliques effectuées sur la bande finale 2 à partir de la même bande-mère 1. Chacune des deux pistes d'enregistrement stéréophonique d'une bande magnétique 2 peut ainsi recevoir de façon indépendante, en plus des signaux audio, des signaux auxiliaires numériques codés qui jouent des rôles spécifiques. Sur l'une des pistes les signaux codés portent des informations liées au programme enregistré et ont été mélangés aux signaux audio lors de l'enregistrement de la bande-mère 1 tandis que sur l'autre piste, les signaux codés portent des informations liées à l'opération de duplication pour conférer une identité à chaque cassette produite et sont mélangés aux signaux audio au cours de l'enregistrement par les ensembles d'enregistrement esclaves de l'installation de duplication.

Il est à remarquer que l'enregistrement du signal auxiliaire codé d'identification de produit peut être enregistré simultanément en une seule opération d'une part sur l'une des pistes de la paire de pistes associée à un sens de défilement de la bande finale 2 et d'autre part sur l'une des pistes de la paire de pistes associée à l'autre sens de défilement de la bande finale 2. Dans ce cas, un seul circuit 310 de détection et de régénération des signaux de fin de séquence et un seul circuit 320 de codage numérique suffisent pour produire un signal numérique auxiliaire codé d'identification susceptible d'être enregistré sur deux des quatre pistes de la bande finale 2. En effet, le signal codé d'identification reste le même pour une même cassette quel que soit le sens de défilement. Aussi, le signal numérique auxiliaire produit par le circuit 320 de codage numérique incorporé dans l'ensemble d'enregistrement esclave 31 est susceptible non seulement d'être mélangé au signal d'information sonore qui est à enregistrer par la tête 41 sur la première piste d'une paire de pistes de la bande finale 2 correspondant à un sens de défilement, mais également d'être mélangé au signal d'information sonore qui est à enregistrer par la tête 44 sur l'une des pistes de la paire de pistes de la bande 2 correspondant à l'autre sens de défilement, sous réserve que pour cette dernière opération le sens du code du signal numérique auxiliaire d'identification soit inversé, par exemple par un circuit d'inversion 341.

On décrira maintenant en référence à la figure 2 un exemple particulier de circuits permettant de produire et d'incrémenter le signal numérique auxiliaire d'identification.

Les circuits de production du signal auxiliaire d'identification sont gérés par un microprocesseur 335 qui coopère d'une part avec une boucle de phase associée à une horloge stabilisée 321 fournissant un signal de référence à une fréquence Fo et d'autre part avec des circuits d'incrémentation qui utilisant la détection du signal de fin de séquence SQ présent à la fin de chaque séquence du programme sonore lu sur la bande-mère 1.

Les informations d'élaboration du signal numérique auxiliaire codé sont de préférence enregistrées dans des mémoires 336, telles que des mémoires programmables par exemple du type EPROM, associées au microprocesseur 335.

De façon avantageuse, des circuits d'autorisation 330 ne permettant la délivrance des informations d'élaboration du signal numérique auxiliaire codé par le microprocesseur 335 et les mémoires associées 336 qu'en réponse à l'application sur ces circuits d'autorisation 330 d'un code de sécurité qui peut être appliqué au moyen d'un support 350 tel qu'une carte magnétique, une cassette statique ou tout autre support de données équivalent. Il est possible de prévoir que l'application du code de sécurité aux circuits d'autorisation 330 déclenche la délivrance d'un nombre prédéterminé et limité d'informations d'élaboration du signal numérique auxiliaire codé. Par ailleurs, il est également possible d'enregistrer à l'aide des circuits d'autorisation 330, sur le support 350 d'application du code de sécurité, des informations d'acquittement lorsque ces moyens d'autorisation 330 ont donné une autorisation de production d'un signal auxiliaire de sécurité en réponse à l'application du code de sécurité. De façon classique, un clavier 334 et un dispositif d'affichage 332 avec leurs circuits d'interface correspondants 333 et 331 peuvent être associés au microprocesseur 335.

Les signaux auxiliaires numériques codés d'identification sont produits à partir des informations contenues dans les mémoires 336 et des signaux de fin de séquence SQ détectés et traités dans les circuits 310 disposés en sortie d'un amplificateur d'enregistrement tel que 25. Une boucle de phase réalisée autour d'un oscillateur à fréquence commandée par tension 326 permet d'appliquer au circuit additionneur 340 des signaux numériques codés dérive d'une fréquence pilote modulés selon le principe de la modulation FSK (Frequency Shift Keying).

Comme on peut le voir sur le schéma de la figure 2, les signaux de fréquence Fo issues de l'horloge stabilisée 321 elle-même alimentée de préférence par une batterie d'alimentation autonome 337, sont appliqués d'une part au microprocesseur 335 et d'autre part à un circuit diviseur fixe 322 divisant par un nombre N prédéterminé. Le signal de référence de fréquence fixe Fo/N est appliqué à une première entrée d'un comparateur de phase 323 dont la sortie est connectée, par l'intermédiaire d'un circuit intégrateur 327, à un oscillateur 326 à fréquence commandée par tension. Un circuit diviseur programmé 324 qui reçoit du bus du microprocesseur 335 les informations d'élaboration du signal numérique auxiliaire codé par l'intermédiaire d'un circuit 315 d'interface diviseur, présente une sortie reliée à une deuxième entrée du circuit comparateur de phase 323. L'oscillateur à fréquence commandée 326 est également connecté au circuit diviseur programmé 324 pour constituer une boucle de phase. Les signaux numériques auxiliaires codés issus de l'oscillateur à fréquence commandée 326 sont appliqués au circuit additionneur 340 par l'intermédiaire d'un circuit 328 de mise en forme par exemple de mise en forme sinusoïdale pure.

Les circuits de la figure 2 peuvent être adaptés à la production de signaux auxiliares numériques codés par dérive d'une fréquence déterminée choisie parmi plusieurs fréquences fixes correspondant à une fréquence de base f située dans une gamme au-delà des fréquences audibles multiplié par des coefficients multiplicateurs égaux aux rapports entre les différentes vitesses de défilement possible du support d'enregistrement final 2 lors de l'enregistrement par la tête 41 et la vitesse de défilement de ce support final 2 en lecture normale. Le choix du rapport desdites vitesses et donc de la valeur du coefficient multiplicateur est affiché au départ et le circuit de commutation de gammes 325 relié au bus du microprocesseur 335 et à l'oscillateur 326 à fréquence commandée permet de commuter la fréquence de cet oscillateur 326 sur la valeur convenable. Dans la pratique, le coefficient multiplicateur précité est souvent égal à 8, 16, 32 ou 64.

Les circuits 310 de détection et de traitement du signal de fin de séquence SQ comprennent un filtre passe-bande 311 destiné à extraire les signaux situés dans la bande de fréquence du signal SQ (par exemple de 5 à 10 Hz), un circuit de détection 312 et un circuit d'interface 313 relié au bus du microprocesseur pour appliquer à celui-ci des signaux numériques codés adaptés pour permettre à chaque détection d'un signal SQ l'incrémentation des signaux fournis sur le circuit d'interface diviseur 315. Un circuit 314 permettant le comptage et l'affichage du nombre de détections du signal de fin de séquence SQ peut avantageusement être associé au système, bien qu'il ne soit pas indispensable pour la génération des signaux auxiliaires numériques codés.

Sur chaque piste devant recevoir des signaux auxiliaires, des amplificateurs 343, 344 peuvent si nécessaire être intercalés entre les circuits mélangeurs 340, 342 et les têtes correspondantes 41, 44.

Le contrôle de l'identité des produits finis, tels que des cassettes, munis de signaux auxiliaires d'identification superposés aux signaux de programme sonore sur au moins une piste d'enregistrement, conformément au procédé décrit précédemment, peut être réalisé très facilement à l'aide d'un décodeur tel que celcui décrit dans le document EP—A—0 021 971 précité et représenté sur la figure 5. On notera cependant que pour la détection des fabrications non autorisées, il n'est pas nécessaire de procéder à un décodage complet des signaux d'identification. En effet, par simple comparaison dans un circuit comparateur des signaux présents dans deux produits tels que deux cassettes d'un même lot, il est possible de déterminer si ces cassettes proviennent d'une duplication autorisée ou non. En effet, dans ce dernier cas, les signaux d'identification sont strictement identiques tandis que les produits fabriqués licitement conformément à l'invention possèdent tous des signaux d'identification ayant des codes différents. Naturellement, l'absence de signal d'identification constitue également une preuve de fabrication illicite.

La figure 5 illustre schématiquement un dispositif permettant de détecter la présence d'un signal auxiliaire tel que celui défini plus haut superposé à un signal principal dans les signaux de lecture fournis par une tête de lecture 510, (par exemple stéréophonique) parcourant deux pistes d'un support d'enregistrement (non représenté).

Les signaux de lecture de l'une des voies devant contenir des signaux auxiliaires, par exemple la voie gauche sg, sont appliqués l'entrée d'un circuit de détection 511 branché en dérivation à la sortie de la tête de lecture.

Le circuit de détection comporte un circuit de filtrage et de remise en forme 512 recevant les signaux sg de la piste choisie, par l'intermédiaire d'une résistance R de valeur élevée. Le circuit 512 peut être constitué par une boucle de phase dont l'oscillateur commandé fournit en sortie un signal à une fréquence pouvant varier de part et d'autre de la fréquence f avec une excursion limitée. Le signal auxiliaire détecté est amplifié et remis en forme (signal S1).

La largeur de la bande passante du circuit 512 est choisie en fonction de la largeur de bande occupée par la modulation et des variations possibles de la vitesse de lecture (au maximum environ 5% de part et d'autre de la vitesse nominale).

Un circuit démodulateur 513 est branché à la sortie du circuit 512 pour, d'une part, fournir à un circuit logique de décodage 514 un signal numérique démodulé et, d'autre part, commander un générateur 515 de signal de synchronisation de bits ou signal de synchronisation primaire.

Pour former le démodulateur 513, on pourra utiliser une boucle de phase centrée sur la fréquence f comportant un oscillateur 513a commandé par tension, un comparateur de phase 513b recevant le signal S1 et le signal de sortie de l'oscillateur 513a, et un amplificateur intégrateur 513c recevant le signal d'erreur fourni par le comparateur 513b et commandant l'oscillateur 513a. Le signal S2 est prélevé en sortie de l'amplificateur 513c, chaque changement de signe de cette sortie correspondant à un passage de la fréquence f+Δf à F−Δf ou inversement.

Le signal de sortie de l'oscillateur 513a indique l'accrochage des démodulateurs 513. Ce signal d'accrochage déclenche le fonctionnement du générateur 515; puis le signal S2 est ensuite prépondérant pour la synchronisation de bits. Le signal d'accrochage est transformé en un signal continu SA ou signal d'autorisation qui revient à zéro un temps déterminé après la dernière impulsion émise par l'oscillateur 513a, par l'intermédiaire d'un circuit monostable redéclenchable 500.

Ce circuit logique 514 comporte un circuit 516 de reconnaissance de format chargé par les bits décodés du signal S2 au rythme du signal SP. Lorsque la configuration correspondant au mot codé de synchronisation de format est reconnue dans le circuit 516 (synchronisation secondaire), celui-ci autorise le chargement des bits suivants dans un registre 517.

Le contenu du registre 517 est comparé au contenu d'un registre 518 au moyen d'un comparateur 519 qui, en cas d'égalité, incrémente un compteur 520 d'une unité et, en cas d'inégalité, commande le transfert dans le registre 518 du contenu du registre 517.

Lorsque, à titre de sécurité, le compteur 520 a compté un nombre prédéterminé d'égalités le contenu du registre 518, c'est-à-dire l'information auxiliaire associée à l'enregistrement écouté, est transféré dans un registre 522 d'un circuit d'interface 521. Le circuit d'interface 521 peut contenir en outre d'autres registres 523, 524 pour le stockage de différentes informations auxiliaires détectées successivement sur des enregistrements différents, et leur comparaison dans un circuit comparateur 526.

**Revendications**

1. Procédé d'identification d'enregistrements sonores illicites, selon lequel on associe au signal d'information sonore un signal auxiliaire codé spécifique à chaque enregistrement individuel, le signal auxiliaire étant mélangé au signal d'information sonore au cours de l'enregistrement du signal d'information sonore sur un support d'enregistrement de telle sorte que le signal auxiliaire soit inscrit de façon répétée tout au long de l'enregistrement, et le signal auxiliaire étant constitué par un signal numérique codé par dérive d'une fréquence de base située dans une gamme au-delà des fréquences audibles du côté des ultrasons, les signaux numériques codés étant détectés et comparés plusieurs fois lors de la lecture du support d'information, caractérisé en ce que l'on introduit le signal auxiliaire au cours d'une opération individuelle d'enregistrement du signal d'information sonore sur le support d'enregistrement final (2) à partir de la lecture d'une bande-mère (1) sur laquelle ont été enregistrés au préalable à la fois le signal d'information sonore et un signal de fin de séquence intercalé entre deux séquences de programme du signal d'information sonore, en ce que le signal auxiliaire est spécifique à chaque enregistrement individuel réalisé et est incrémenté à chaque détection d'un signal de fin de séquence lors de la lecture de la bande-mère (1), en ce que l'on mélange le signal auxiliaire au signal d'information sonore au cours de l'enregistrement du signal d'information sonore sur le support d'enregistrement final (2) de manière à inscrire le signal auxiliaire de façon répétée tout au long de l'enregistrement et en ce que le signal auxiliaire numérique codé est dérivé d'une fréquence pilote F qui correspond à la fréquence de base f multipliée par un coefficient égal au rapport entre la vitesse de défilement du support individuel d'enregistrement final (2) lors de l'opération individuelle d'enregistrement et la vitesse de défilement du support individuel d'enregistrement final en lecture normale de ce dernier, de telle sorte qu'il suffit de détecter et comparer les signaux numériques codés de deux supports d'enregistrement finals (2) pour contrôler si l'un est réalisé d'une façon illicite.

2. Procédé selon la revendication 1, caractérisé en ce que le signal auxiliaire est mélangé au signal d'information sonore après passage de ce dernier dans les circuits d'égalisation (303) présents dans le dispositif individuel servant à l'enregistrement sur le support d'enregistrement final (2).

3. Procédé selon la revendication 1 ou la revendication 2, caractérisé en ce que l'on associe plusieurs opérations individuelles d'enregistrement simultané d'un même signal d'information sonore avec des signaux auxiliaires codés propres à chaque support d'enregistrement final (2) et en ce que ces opérations individuelles d'enregistrement sont effectuées en coopération avec une seule opération de lecture d'une bande-mère commune (1).

4. Procédé selon l'une quelconque des revendications 1 à 3, caractérisé en ce qu'au cours de deux opérations individuelles simultanées d'enregistrement sur deux pistes différentes d'un même support d'enregistrement final (2) à partir des lectures de deux pistes correspondantes d'une bande-mère (1), on introduit un premier signal auxiliaire codé sur une piste du support d'enregistrement final et un second signal auxiliaire codé correspondant à un signal codé séquentiellement en sens inverse du premier signal sur l'autre piste du support d'enregistrement final.

5. Procédé selon la revendication 1, caractérisé en ce que ledit coefficient multiplicateur est égal à 8, 16, 32 ou 64.

6. Procédé selon la revendication 1, caractérisé en ce que la fréquence de base f est comprise entre environ 15 et 18 kHz.

7. Procédé selon l'une quelconque des revendications 1 à 6, caractérisé en ce que le signal de fin de séquence de programme présente une fréquence fondamentale comprise entre environ 5 Hz et 10 Hz, est porté par une modulation d'amplitude et est enregistré sur la bande mère dans les intervalles libres situés entre deux séquences consécutives différentes de programme du signal d'information sonore.

8. Procédé selon l'une quelconque des revendications 1 à 7, caractérisé en ce que ledit signal auxiliaire est inscrit à un niveau d'amplitude de plusieurs dizaines de décibels en-dessous du niveau maximal du signal d'information sonore.

9. Procédé selon l'une quelconque des revendications 1 à 8, caractérisé en ce que le signal auxiliaire comporte, après une période à fréquence fixe, un période de synchronisation primaire définissant un rythme de signal numérique, une période de synchronisation secondaire comprenant un groupe code dit de format, puis un groupe codé spécifique dont au moins une partie est modifiée après chaque détection d'un signal de fin de séquence.

10. Procédé selon la revendication 9, caractérisé en ce que le groupe codé spécifique comprend des informations relatives au lieu, à la date et à l'heure d'enregistrement, ainsi qu'au numéro de la machine d'enregistrement et au numéro d'ordre de l'enregistrement individuel effectué au cours d'une opération d'enregistrement d'une série de supports individuels d'enregistrement finals sur une même machine, et sur une période de temps prédéterminée.

11. Installation de duplication d'enregistrements sonores effectués sur au moins une piste d'un support d'enregistrement tel qu'une bande magnétique, l'installation de duplication comprenant un ensemble maître (11) de lecture de signaux d'information sonore et de signaux de fin de séquence intercalés entre deux séquences de programme du signal d'information sonore, lesdits signaux étant enregistrés sur une bande magnétique mère (1) et au moins un ensemble esclave (31) d'enregistrement sur un support individuel d'enregistrement final (2) desdits signaux d'information sonore et signaux de fin de séquence lus sur la bande-mère (1), l'ensemble esclave d'enregistrement (31) comprenant, associées à un circuit égaliseur d'enregistrement (21) et à un circuit amplificateur d'enregistrement (25), un circuit égaliseur (303) fournissant lesdits signaux d'information, un oscillateur de polarisation (301) et un amplificateur de prémagnétisation de puissance (302) étant connectés en série audit circuit égaliseur, caractérisée en ce que l'ensemble esclave (31) comprend des circuits (310) de détection et de régénération des signaux de fin de séquence, lesquels circuits sont connectés en sortie dudit amplificateur d'enregistrement (25), des circuits (320) de codage numérique par dérive d'une fréquence pilote, pour produire un signal numérique auxiliaire codé, des moyens associés au circuit de régénération des signaux de fin de séquence et connectés aux circuits de codage numérique pour modifier le codage numérique à chaque nouvelle détection de signaux de fin de séquence et un circuit additionneur (340) en amont de la tête d'enregistrement esclave (41) sur le support individuel d'enregistrement final (2) pour additionner le signal numérique auxiliaire codé au signal d'information sonore.

12. Installation selon la revendication 11, caractérisée en ce que le circuit additionneur (340) est connecté en sortie du circuit égaliseur d'esclave (303).

13. Installation sèlon la revendication 11 ou la revendication 12, caractérisée en ce que les circuits (310) de détection et de régénération des signaux de fin de séquence comprennent un filtre passe-bande (311) et un circuit de régénération (312) pour régénérer un signal codé binaire démodulé de fin de séquence.

14. Installation selon l'une quelconque des revendications 11 à 13, caractérisée en ce que les circuits (320) de codage numérique par dérive d'une fréquence pilote F comprennent une horloge stabilisée de référence (321), un comparateur de phase (323) dont une première entrée est connectée en sortie d'un circuit diviseur fixe (322) étant connecté à ladite horloge, un oscillateur (326) à fréquence commandée par tension connecté d'une part à un circuit diviseur programmé (324) et d'autre part à un circuit de mise en forme sinusoidale pure (328) dont la sortie est reliée au circuit additionneur (340), un circuit intégrateur (327) étant en outre interposé entre la sortie dudit comparateur de phase (323) et l'oscillateur à fréquence commandée (326) et le diviseur programmé (324) étant connecté d'une part à un microprocesseur (335) auquel sont appliqués les signaux d'horloge, des informations d'élaboration du signal numérique axiliaire codé et le signal codé binaire démodulé de fin de séquence, et d'autre part à une deuxième entrée dudit comparateur de phase (323).

15. Installation selon la revendication 14, caractérisée en ce que les informations d'élaboration du signal numérique auxiliaire codé sont enregistrées dans des mémoires (336) associées au microprocesseur (335).

16. Installation selon la revendication 15, caractérisée en ce que des moyens d'autorisation (330) sont prévus pour ne délivrer les informations d'élaboration du signal numérique auxiliaire codé qu'en réponse à l'application au microprocesseur (335) d'un code de sécurité.

17. Installation selon la revendication 16, caractérisée en ce que les moyens d'autorisation (330) n'autorisent que la délivrance d'un nombre prédéterminé d'informations d'élaboration du signal numérique auxiliaire codé lorsqu'un code sécurité est appliqué.

18. Installation selon la revendication 16 ou la revendication 17, caractérisée en ce que le code de sécurité est appliqué au moyen d'un support (350) tel qu'une carte magnétique ou une cassette statique et en ce que des informations sont enregistrées sur ledit support (350) lorsque les moyens d'autorisation (330) ont donné une autorisation en réponse à l'application du code de sécurité.

**Patentansprüche**

1. Identifizierungsverfahren für unerlaubte Schallaufzeichnungen, wobei man einem Informationsschallsignal ein Zusatzsignal zufügt, welches für jede Aufnahme individuell codiert ist und wobei das Zusatzsignal dem Informationsschallsignal im Laufe der Aufnahme des Informationschallsignals auf einen Schallträger so beigemischt wird, daß das Zusatzsignal während der gesamten Aufnahme wiederholt aufgenommen wird und wobei das Zusatzsignal aus einem codierten numerischen Signal, welches von einer Basisfrequenz aus einem Bereich außerhalb der hörbaren Frequenzen auf der Seite des Ultraschalls abgeleitet ist, besteht und wobei die codierten numerischen Signale während des Lesens des Informationsträgers mehrmals festgestellt und verglichen werden, dadurch gekennzeichnet, daß man das Zusatzsignal während einer individuellen Aufnahme des Informationsschallsignals auf dem Endträger (2) aufbringt, ausgehend vom Lesen des Mutterbandes (1) auf dem vorher sowohl das Informationsschallsignal als auch ein Endsignal zwischen zwei Stücken des Informationsschallsignales registriert sind, wobei das Zusatzsignal bei jeder einzelnen durchgeführten Aufnahme spezifisch ist und beim Feststellen eines Endsignales während des Lesens des Mutterbandes (1) erhöht wird, daß man das Zusatzsignal dem Informationsschallsignal im Zuge der Aufnahme des Informationsschallsignals auf dem Endtonträger (2) so zumischt, daß das Zusatzsignal während der Aufnahme wiederholt aufgenommen wird, und daß das codierte numerische Zusatzsignal von einer Pilotfrequenz F abgeleitet wird, die der Basisfrequenz f, multipliziert mit einem Koeffizienten der gleich ist dem Verhältnis zwischen der individuellen Geschwindigkeit des Finalschallträgers (2) während der einzelnen Aufnahme und der Geschwindigkeit des Finalschallträgers während des normalen Abspielens des letzteren, sodaß es ausreicht, die codierten numerischen Signale zweier Finalschallträger (2) festzustellen und zu vergleichen, um zu kontrollieren, ob einer davon illegal erhalten wurde.

2. Verfahren nach Anspruch 1, dadurch gekennzeichnet, daß das Zusatzsignal dem Informationsschallsignal nach Durchgang des letzteren durch Ausgleichsschaltkreise (303), die in der individuellen Aufnahmevorrichtung für den Endträger (2) vorgesehen sind, zugefügt wird.

3. Verfahren nach Anspruch 1 oder 2, dadurch gekennzeichnet, daß man mehrere individuelle Aufnahmevorgänge eines Informationsschallsignals simultan mit codierten Zusatzsignalen, die jedem Finalträger (2) eigen sind, verbindet und daß diese einzelnen Aufnahmen im Zusammenhang mit einem einzigen Lesevorgang eines gemeinsamen Mutterbandes (1) durchgeführt werden.

4. Verfahren nach einem der Ansprüche 1 bis 3, dadurch gekennzeichnet, daß man beim simultanen Aufnehmen auf zwei unterschiedlichen Spuren auf ein und demselben Endträger (2), ausgehend vom Lesen der beiden korrespondierenden Spuren eines Mutterbandes (1), ein erstes codiertes Zusatzsignal auf einer Spur des Endträgers und ein zweites codiertes Zusatzsignal, das einem schrittweise invertierten ersten Signal entspricht, auf der anderen Spur des Endträgers einfügt.

5. Verfahren nach Anspruch 1, dadurch gekennzeichnet, daß der Multiplikationskoeffizient gleich 8, 16, 32 oder 64 ist.

6. Verfahren nach Anspruch 1, dadurch gekennzeichnet, daß die Basisfrequenz f zwischen etwa 15 und 18 kHz liegt.

7. Verfahren nach einem der Ansprüche 1 bis 6, dadurch gekennzeichnet, daß das Sequenzendsignal eine Grundfrequenz zwischen etwa 5 Hz und 10 Hz aufweist, amplitudenmoduliert ist und auf dem Mutterband in freien Intervallen zwischen zwei aufeinanderfolgenden Stücken des Informationsschallsignales angeordnet ist.

8. Verfahren nach einem der Ansprüche 1 bis 7, dadurch gekennzeichnet, daß das Zusatzsignal auf einem Amplitudenniveau eingetragen ist, das mehrere Dutzend Dezibel unter dem maximalen Informationsschallsignal liegt.

9. Verfahren nach einem der Ansprüche 1 bis 8, dadurch gekennzeichnet, daß das Zusatzsignal nach einer Zeitdauer fixer Frequenz eine Zeitdauer primärer Synchronisation aufweist, welche einen Signalrythmus numerisch definiert und eine zweite Synchronisationsdauer, welche eine codierte Gruppe, genannt Format aufweist, gefolgt von einer speziell codierten Gruppe, die zumindest zum Teil nach jedem Feststellen eines Sequenzendsignales geändert wird.

10. Verfahren nach Anspruch 9, dadurch gekennzeichnet, daß die speziell codierte Gruppe Informationen bezüglich des Ortes, das Datum und die Stunde der Aufnahme aufweist, ebenso wie die Nummer der Aufnahmevorrichtung und die Nummer der individuellen Aufnahme, die im Zuge eines Aufnahmevorganges einer Anzahl von individuellen Schallträgern auf dieser einen Vorrichtung innerhalb einer vorbestimmten Zeitdauer durchgeführt worden ist.

11. Kopiergerät für Schallaufnahmen auf zumindest eine Spur eines Schallträgers, wie eines Magnetbandes, das eine Lesevorrichtung (11) zum Erfassen der Schallinformationssignale und der Sequenzendsignale, die zwischen zwei Stücken des Schallinformationsprogramms angeordnet sind, die auf einem magnetischen Mutterband (1) aufgezeichnet sind aufweist, sowie zumindest eine Folgevorrichtung (31), die auf einem individuellen Schallendträger (2) die Informationsschallsignale und Sequenzendsignale, die am Mutterband (1) gelesen werden, aufzeichnet, wobei die Folgevorrichtung (31) in Verbindung mit einem Aufzeichnungsausgleichschaltkreis (21) und einem Aufzeichnungsverstärkerschaltkreis (25), einen Ausgleichsschaltkreis (303) aufweist, der die Informationssignale liefert, sowie einen Polarisationsoszillator (301) und einen Vormagnetisierungsleistungsverstärker (302), die in Serie mit dem genannten Ausgleichsschaltkreis verbunden sind, dadurch gekennzeichnet, daß die Folgevorrichtung (31) Schaltkreise (310) zur Erkennung und Wiedererzeugung der Sequenzendsignale aufweist, die an den Ausgang des Aufzeichnungsverstärkers (25) geschaltet sind, weiters Codierungskreise (320) zum numerischen Codieren, ausgehend von einer Pilotfrequenz, um ein codiertes numerisches Zusatzsignal zu erzeugen, Mittel, die dem Kreis zur Regenerierung der Sequenzendsignale assoziert sind und mit den numerischen Codierkreisen verbunden sind, um die numerische Codierung bei jeder neuen Erkennung des Sequenzendsignales zu verändern und ein Additionsschaltkreis (340) stromaufwärts des Schreibkopfes (41) für den individuellen Schallträger (2) um das codierte numerische Zusatzsignal dem Informationsschallsignal zu addieren.

12. Vorrichtung nach Anspruch 11, dadurch gekennzeichnet, daß der Additionsschaltkreis (340) mit dem Ausgang des Folgeausgleichskreises (303) verbunden ist.

13. Vorrichtung nach Anspruch 11 oder 12, dadurch gekennzeichnet, daß die Schaltkreise (310) zur Erkennung und Regenerierung des Sequenzendsignals ein Bandpassfilter (311) und einen Regenerationskreis (312) zur Regenerierung eines binären demodulierten Sequenzendsignales aufweisen.

14. Vorrichtung nach einem der Ansprüche 11 bis 13, dadurch gekennzeichnet, daß die Kreise (320) zum numerischen Codieren, ausgehend von einer Pilotfrequenz F, einen stabilisierten Referenztaktgeber (321), einen Phasenvergleichsschaltkreis (323), dessen erster Eingang mit dem Ausgang eines fixen Teilers (322), der mit dem genannten Taktgeber verbunden ist, verbunden ist, daß ein spannungsgeregelter durchstimmbarer Oszillator (326) einerseits an einen programmierten Teilerkreis (324) und andererseits mit einem reine Sinusform liefernden Kreis (328), dessen Ausgang an den Additionskreis (340) geschaltet ist, verbunden ist, und daß ein Integrationskreis (327) darüberhinaus zwischen dem Ausgang des Phasenvergleichsschaltkreises (323) und dem gerregelten Oszillator (326), sowie daß der programmierte Teiler (324) einerseits mit einem Mikroprozessor (335), dem die Signale des Taktgebers, die ausgearbeiteten Informationen des codierten numerischen Zusatzsignals und des binären demodulierten Endsignals zugeführt werden und andererseits mit einem zweiten Eingang des gennanten Phasenvergleichsschaltkreises (323) verbunden ist.

15. Vorrichtung nach Anspruch 14, dadurch gekennzeichnet, daß die ausgearbeiteten Informationen des codierten numerischen Zusatzsignales in Speichern (336), die dem Mikroprozessor (335) zugeordnet sind, gespeichert werden.

16. Vorrichtung nach Anspruch 15, dadurch gekennzeichnet, daß Überprüfungsmittel (33) vorgesehen sind, um die Informationen des ausgearbeiteten codierten numerischen Zusatzsignals nur als Antwort auf die Anfrage des Mikroprozessors (335) in Form eines Sicherheitscodes abzugeben.

17. Vorrichtung nach Anspruch 16, dadurch gekennzeichnet, daß die Überprüfungsmittel (330) nur die Abgabe einer vorbestimmten Anzahl von Informationen der Ausarbeitung des codierten numerischen Zusatzsignals gestatten, wenn ein Sicherheitscode verwendet wird.

18. Vorrichtung nach Anspruch 16 oder 17, dadurch gekennzeichnet, daß der Sicherheitscode mittels eines Trägers (350), wie einer magnetischen Karte oder einer statischen Kassette angewandt wird und daß die Informationen auf dem genannten Träger (350) gespeichert werden, wenn die Überprüfungsmittel (330) die Genehmigung zur Antwort auf den Sicherheitscode gegeben haben.

**Claims**

1. Process for identifying illicit sound recordings, whereby a coded auxiliary signal specific to each individual recording is associated with the sound information signal, the auxiliary signal being mixed with the sound information signal whilst recording the sound information signal on a recording medium in such a way as to inscribe the auxiliary signal repeatedly throughout the whole recording, the auxiliary signal being constituted by a coded digital signal derived from a basic frequency situated in a range outside the spectrum of audible frequencies towards the ultrasounds, the coded numerical signals being detected and compared several times during readout of the information medium, characterized in that the auxiliary signal is introduced during an individual recording operation of the sound information signal of the final recording medium (2) from the readout of a master tape (1) on which both the sound information signal and an end-of-sequence signal inserted between two sequencies of program of the sound information signal have been recorded beforehand, in that the auxiliary signal is specific to each individual recording made and is incremented at each detection of an end-of-sequence signal when the master tape (1) is read out, in that the auxiliary signal is mixed with the sound information signal whilst recording the sound information signal on the final recording medium (2), in such a way as to inscribe the auxiliary signal repeatedly throughout the whole recording and in that the coded digital auxiliary signal being derived from a pilot frequency F which corresponds to the basic frequency F multiplied by a factor equal to the ratio of the advancing speed of the individual medium (2) of final recording during the individual recording operation to the advance speed of the individual medium (2) of final recording during normal readout thereof, such that it suffices to detect and compare the coded numerical signals of two final recording media (2) in order to control whether one is illicitely made.

2. Process according to claim 1, characterized in that the auxiliary signal is mixed with the sound information signal once the latter has gone through the equalizer circuits (303) provided in the individual device used for recording on the final recording medium (2).

3. Method according to claim 1 or claim 2, characterized in that several individual operations of simultaneous recording of the same sound information signal are associated with coded auxiliary signals specific to every final recording medium (2), and in that said individual recording operations are conducted in cooperation with only one readout of a common master tape (1).

4. Method according to any one of claims 1 to 3, characterized in that in the course of two simultaneous individual operations to record on two different tracks of the same final recording medium (2) from the readout of the two corresponding tracks of a master tape (1), a first coded auxiliary signal is introduced on one track of the final recording medium, whilst a second coded auxiliary signal corresponding to a signal coded sequentially in reverse to the first signal, is introduced on the other track of the final recording medium.

5. Method according to claim 1, characterized in that the said multiplying factor is equal to 8, 16, 32 or 64.

6. Method according to claim 1, characterized in that the basic frequency f is between about 15 and 18 kHz.

7. Method according to any one of claims 1 to 6, characterized in that the end-of-program sequence signal has a basic frequency which can vary between about 5 Hz and 10 Hz, said signal is carried by an amplitude modulation and is recorded on the master tape in the free gaps situated between two different consecutive program sequences of the sound information signal.

8. Method according to any one of claims 1 to 7, characterized in that the said auxiliary signal is recorded at a level of amplitude lower by several tens decibels than the maximum level of the sound information signal.

9. Method according to any one of claims 1 to 8, characterized in that the auxiliary signal comprises, after a fixed frequency period, a primary synchronization period defining a digital signal rate, a secondary synchronization period comprising a coded group known as format group, then a specific coded group of which at least one part is modified after every detection of an end-of-sequence signal.

10. Method according to claim 9, characterized in that the specific coded group can itself contain information relative to the place, date and time of recording, to the number of the recording machine and to the order number of the individual recording made during a recording of a series of individual media of final recordings, on the same machine and over a predetermined time period.

11. Installation for duplicating sound recordings made on at least one track of a recording medium such as a magnetic tape, the duplicating installation comprising a master assembly (11) for reading the sound information signals and the end-of-program sequence signals inserted between two sequences of program of the sound information signal, said signals being recorded on a magnetic master tape (1), and at least one slave assembly (31) to record on an individual medium of final recording (2) the said sound information signals and end-of-sequence signals read out from the master tape (1); the said slave recording assembly (31) comprising, associated to a recording equalizer circuit (21) and to a recording amplifier circuit (25), at least one slave equalizer circuit (303), supplying said information signals, one polarizing oscillator (301) and one premagnetizing power amplifier (302), which are connected in series to said equalizer circuit, characterized in that said slave assembly (31) comprises circuits (310) for detecting and regenerating end-of-sequence signals, which circuits are connected to the output of the said recording amplifier (25), digital coding circuits (320) by derivation from a pilot frequency for producing a coded auxiliary digital signal, means associated to the end-of-sequence signal regenerating circuit and connected to the digital coding circuits to modify the digital coding at each new detection of end-of-sequence signals and an adder circuit (340) to add the coded auxiliary digital signal with the sound information signal and upstream of the slave recording head (41) on the final recording individual medium (2).

12. Installation according to claim 11, characterized in that the adder circuit (340) is connected to the output of the slave equalizer circuit (303).

13. Installation according to claim 11 or claim 12, characterized in that the end-of-sequence signal regeneration and detection circuits (310) comprise a passband filter (311) and a regeneration circuit (312) for regenerating a demodulated binary coded end-of-sequence signal.

14. Installation according to any one of claims 11 to 13, characterized in that the circuits (320) of digital coding derived from a pilot frequency f comprise a stabilized reference clock (321), a phase comparator (323) with a first input connected to the output of a fixed divider circuit (322) being connected to said clock, a voltage controlled oscillator (326), connected, on the one hand, to a programmed divider circuit (324) and, on the other hand, to a shaping circuit giving a pure sinusoidal shape (328), whose output is connected to the adder circuit (340), an integrating circuit (327) being also inserted between the output of the said phase comparator (323) and the voltage-controlled oscillator (326) and the programmed divider (324) being connected on the one hand to a microprocessor (335) to which are applied the clock signals of the information material producing the coded auxiliary digital signal, and the end-of-programme demodulated binary signal and on the other hand, to a second input of the said phase comparator (323).

15. Installation according to claim 14, characterized in that the information material producing the coded auxiliary digital signal is recorded in memories (336) associated to the microprocessor (335).

16. Installation according to claim 15, characterized in that authorization means (330) are provided to deliver the information producing the coded auxiliary digital signal only in response to the application of a safety code to the microprocessor (335).

17. Installation according to claim 16, characterized in that said authorization means (330) can authorize the delivery of only a predetermined number of items of information producing the coded auxiliary digital signal when a safety code is applied.

18. Installation according to claim 16 or claim 17, characterized in that the safety code is applied by way of a medium (350) such as a magnetic card or static cassette and information is recorded on the said medium (350) when the authorization means (330) have given an authorization in response to the application of the safety code.

Fig. 1

Fig. 2

Fig. 5

**0 078 218**

# Fig. 4

# Fig. 3